**Europäisches Patentamt**

**European Patent Office**

**Office européen des brevets**

(19)

(11) Veröffentlichungsnummer: **0 025 151**
**B1**

(12)

# EUROPÄISCHE PATENTSCHRIFT

(45) Veröffentlichungstag der Patentschrift:
**31.08.83**

(21) Anmeldenummer: **80104980.0**

(22) Anmeldetag: **21.08.80**

(51) Int. Cl.³: **C 21 C  5/46,** B 23 K  7/10

(54) **Rohrkörper für Sauerstofflanzen.**

(30) Priorität: 06.09.79  DE 2936022

(43) Veröffentlichungstag der Anmeldung:
**18.03.81 Patentblatt 81/11**

(45) Bekanntmachung des Hinweises auf die Patenterteilung:
**31.08.83 Patentblatt 83/35**

(84) Benannte Vertragsstaaten:
**AT BE FR GB IT LU**

(56) Entgegenhaltungen:
**DE-B-2 327 595**
**DE-B-2 447 723**
**DE-U-7 508 317**
**GB-A-2 009 379**

(73) Patentinhaber: **BEDA-Oxygentechnik, Armaturen GmbH & Co.KG, Siemensstrasse 14, D-4030 Ratingen 4 (DE)**

(72) Erfinder: **Marmann, Horst, Dürener Strasse 270, D-5000 Köln 41 (DE)**

(74) Vertreter: **Patentanwaltsbüro Cohausz & Florack, Postfach 14 01 47, D-4000 Düsseldorf 1 (DE)**

Rohrkörper für Sauerstofflanzen

Die Erfindung betrifft einen Rohrkörper für Sauerstofflanzen, in dem das Sauerstoffventil mit Bedienungsmechanismus, das Rückstromsperrventil, das Schlackenrücklaufsperrventil und die Klemmhalterung für das Lanzenrohr untergebracht sind.

Rohrkörper für Sauerstofflanzen dieser Art sind mit Besonderheiten der Ausgestaltung der Ventilanordnungen bekannt aus DE-PS 2 447 723, DE-PS 2 327 595, DE-GM 7 508 317 und DE-GM 7 438 816. Zur Unterbringung aller Ventilanordnungen und der Klemmhalterung für die Rohrlanze sind die bekannten Rohrkörper für Sauerstofflanzen fünf- bzw. siebenteilig mit vier bzw. sechs Verbindungsstellen der Rohrkörperteile ausgebildet. Die Verbindungsstellen bilden Gefahrenquellen für Leckagen. Da die Sauerstofflanzen im Betrieb recht unsanft behandelt werden, müssen die Verbindungsstellen besonders gut abgedichtet werden, was mit beträchtlichem konstruktivem und finanziellem Aufwand verbunden ist. Trotz des Bemühens um eine gute Abdichtung der Verbindungsstellen bleiben diese jedoch immer leckagegefährdet. Die Mehrzahl der Teile, aus denen der Rohrkörper für Sauerstofflanzen aufgebaut ist, verteuert die Herstellung und vergrössert den Montageaufwand beim Zusammensetzen des Rohrkörpers.

Aufgabe der vorliegenden Erfindung ist daher die Schaffung eines Rohrkörpers, bei dem die Leckagegefahr an Verbindungsstellen vermindert wird, der in einfacher und preiswerter Weise herstellbar ist, durch leichte, kompakte Bauweise handlicher ist und keiner aufwendigen Montage bedarf.

Zur Lösung dieser Aufgabe wird ein Rohrkörper der eingangs genannten Gattung vorgeschlagen, dessen die Ventilanordnungen aufnehmender Abschnitt mit Hebelschutz durchgehend einstückig ausgebildet ist. Durch die erfindungsgemäss einstückige Ausbildung des die Ventilanordnungen aufnehmenden Rohrkörperabschnitts wird die Anzahl der leckagegefährdeten Verbindungsstellen von vier bzw. sechs auf eine reduziert, nämlich die Verbindungsstelle zwischen dem die Ventilanordnungen aufnehmenden Abschnitt und dem die Klemmhalterung für das Lanzenrohr enthaltenden Abschnitt des Rohrkörpers. Diese Zweiteilung ist für solche Anwendungsfälle zweckmässig, bei denen der die Klemmhalterung für das Lanzenrohr enthaltende Abschnitt zur Anpassung an verschiedene Durchmesser der Lanzenrohre zweckmässigerweise auswechselbar sein soll. Mit derselben Ventilanordnung können dann Lanzen für verschiedene Lanzenrohrdurchmesser betrieben werden. Zur Anpassung an den jeweiligen Lanzendurchmesser muss dann lediglich der das Lanzenrohr aufnehmende Abschnitt des Rohrkörpers ausgewechselt werden.

Für eine bestimmte häufig gebrauchte Lanzenrohrabmessung ist es dagegen zweckmässiger, gemäss einer bevorzugten Ausgestaltung der Erfindung den Rohrkörper insgesamt einstückig auszubilden, wobei neben den Ventilanordnungen auch die Klemmhalterung für das Lanzenrohr in den Rohrkörper einsetzbar ist. In diesem Fall ergibt sich eine noch einfachere, preiswertere und handlichere Ausführung des Rohrkörpers und eine leckagegefährdete Verbindungsstelle ist dann innerhalb des Rohrkörpers nicht mehr vorhanden.

Die erfindungsgemässe Ausführung des Rohrkörpers für Sauerstofflanzen hat neben der Verminderung der Leckagegefahr die Vorteile einer einfachen und preiswerten Herstellung, weil nur noch ein Teil für den Rohrkörper hergestellt werden muss, die Montage vereinfacht sich, weil der Rohrkörper nicht mehr aus verschiedenen Teilen zusammengesetzt werden muss, und es ergibt sich eine leichte kompakte Bauweise, da wegen des Fortfalls der Verbindungselemente zwischen den Rohrkörperabschnitten die Baulänge sich auf weniger als die Hälfte verkürzen und Gewicht einsparen lässt. Dies führt zu einer handlicheren Ausführung des Rohrkörpers, so dass er auch an engen schwer zugänglichen Stellen besser zum Einsatz gebracht werden kann als die bekannten erheblich längeren Rohrkörperausführungen.

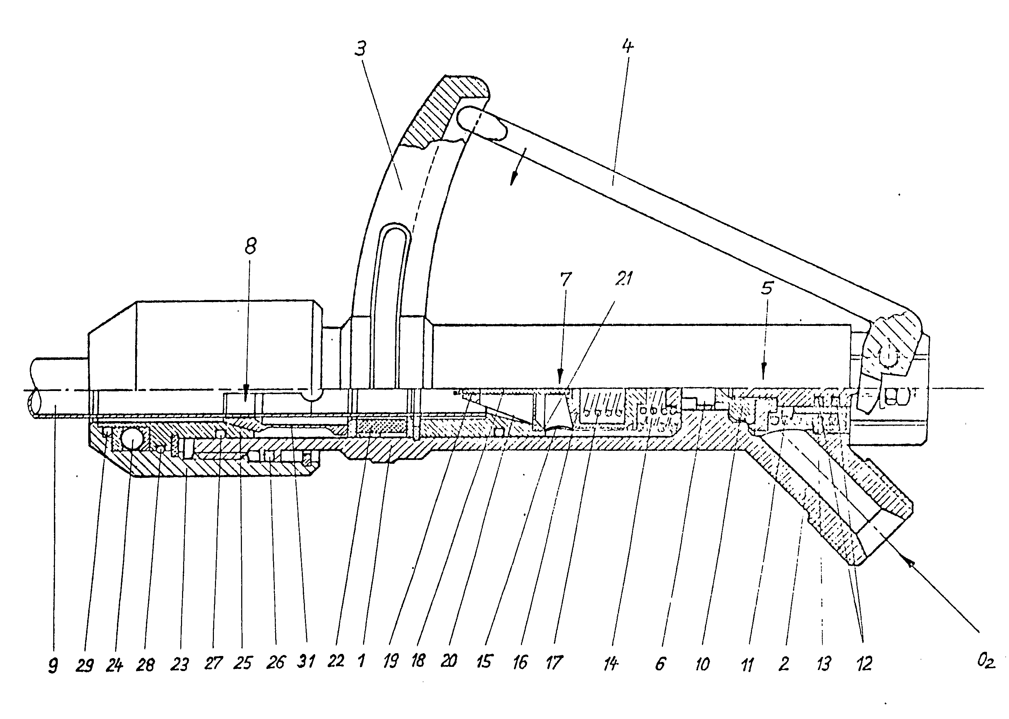

Anhand des in der Zeichnung dargestellten Ausführungsbeispiels wird die Erfindung näher erläutert.

Bei dem dargestellten Ausführungsbeispiel ist der Rohrkörper 1 mit Sauerstoffzuführungsstutzen 2 sowie Führung und Schutz 3 für den Bedienungshebel 4 durchgehend einstückig. An Einbauten enthält er das allgemein mit 5 bezeichnete Sauerstoffventil, das Rückstromsperrventil 6, das Schlackenrücklaufsperrventil 7 sowie die Klemmhalterung 8 für das Lanzenrohr 9. Die Ventile 5, 6 und 7 sowie die Klemmhalterung 8 können entweder von einer Öffnung des Rohrkörpers 1 aus nacheinander eingesetzt werden oder die Einbauen 5, 6, 7, 8 können durch beide Öffnungen des Rohrkörpers 1 eingebaut werden. Im dargestellten Ausführungsbeispiel ist das Ventil 5 durch die rechte Öffnung des Rohrkörpers 1 eingesetzt, und die Ventile 6 und 7 sowie die Klemmhalterung 8 sind durch die linke Öffnung des Rohrkörpers 1 eingesetzt.

Die Funktionsweise der Ventil- und Klemmhalterungseinbauten in dem Rohrkörper 1 ist wie folgt: Durch Druck auf den Bedienungshebel 4, der sich dabei in Richtung auf den Rohrkörper 1 bewegt, wird der Ventilkegel 10 gegen den Druck der Feder 11 in der Zeichnung nach rechts von seinem Sitz wegbewegt und gibt den Durchlass für den Sauerstoffstrom aus dem Stutzen 2 in das Innere des Rohrkörpers 1 frei. Solange der Bedienungshebel 4 betätigt wird, bleibt das Ventil 5 in der Öffnungsstellung. Beim Loslassen des Hebels 4 wird der Ventilkegel 10 durch die Entspannung der Druckfeder 11 in seine in der Zeichnung dargestellten Schliessstellung zurückgeführt. Durch Dichtringe 12, 13 ist eine Abdichtung der Ventile 5 nach aussen sichergestellt.

Das Rückstromsperrventil 6 öffnet sich unter dem Druck des Sauerstoffstroms bei offenem Ventil 5 unter Zusammendrückung der Feder 14. Übersteigt bei einer Rückströmung der Rückströmdruck den Druck des zugeführten Sauerstoffs, so schliesst das Rückstromsperrventil 6 unter der Wirkung der Feder 14 den Durchgang durch den Rohrkörper 1. In der Zeichnung befindet sich das Rückstromsperrventil 6 in der Schliessstellung.

Das Schlackenrücklaufsperrventil 7 besteht aus einem Gehäuse 15, in dem der Ventilschliesskörper 16 unter dem Druck der Feder 17 steht. Die Druckstellung der Feder 17 wird durch den Stift 18 gehalten, der durch Weichlot 19 mit dem Sieb 20 verbunden ist. Bei Rücklauf heisser Schlacke wird das Weichlot 19 aufgeschmolzen, der Stift 18 verliert seinen Halt gegenüber dem Sieb 20 und durch die Druckfeder 17 wird der Ventilschliesskörper 16 nach links gegen den Ventilsitz 21 in die Schliessstellung verschoben.

Die Klemmhalterung 8 für das Lanzenrohr 9 besteht aus einer Spannzange 31, die gegen einen Gummipuffer 22 nachgiebig in dem Rohrkörper 1 gelagert ist. Nach dem Einschieben des Lanzenrohrs 9 in die Öffnung der Spannzange 31 wird der Gewindekopf 23 auf den Rohrkörper 1 aufgeschraubt. Eine in dem Gewindekopf 23 mittels eines Wälzlagers 24 drehbar gelagerte Druckhülse 25 schiebt sich mit ihrer konischen Innenfläche beim Aufschrauben des Gewindekopfes 23 auf eine entsprechend abgeschrägte Aussenumfangsfläche der Spannzange 31 und drückt diese dabei nach innen gegen das Lanzenrohr 9, bis dieses festgeklemmt ist. Dichtungen 26, 27, 28 und 29 bewirken eine Abdichtung des Gewindekopfes 23 gegenüber dem Rohrkörper 1.

Im Fall von Schlackerücklauf, der zu einer Schliessung des Schlackenrücksperrventils 7 führt und dieses für weitere Verwendung unbrauchbar macht, kann das Schlackenrücklaufsperrventil 7 mit den Teilen 15 bis 21 komplett als Wechselpatrone wartungsfreundlich ausgetauscht werden.

## Patentansprüche

1. Rohrkörper (1) für Sauerstofflanzen, in dem das Sauerstoffventil (5) mit Bedienungsmechanismus, das Rückstromsperrventil (6), das Schlackenrücklaufsperrventil (7) und die Klemmhalterung (8) für das Lanzenrohr (9) untergebracht sind, dadurch gekennzeichnet, dass sein die Ventile (5, 6, 7) aufnehmender Abschnitt mit Hebelschutz (3) durchgehend einstückig ausgebildet ist.

2. Rohrkörper nach Anspruch 1, dadurch gekennzeichnet, dass die Ventile (5, 6, 7) und die Klemmhalterung (8) in einem einstückigen Gehäuse (1) eingesetzt sind.

## Claims

1. A tube member (1) for oxygen lances, which contains the oxygen valve (5) with the operating mechanism, the reverse current stop valve (6), the slag return stop valve (7) and the clamping holder (8) for the lance tube (9), characterized in that its portion receiving the valves (5, 6, 7) is made integral with the lever guard (3).

2. A tube member according to claim 1, characterized in that the valves (5, 6, 7) and the clamping holder (8) are inserted in a one-piece casing (1).

## Revendications

1. Corps tubulaire (1) pour lances à oxygène, dans lequel sont logés la valve à oxygène (5) avec mécanisme de commande, le clapet anti-retour (6), le clapet anti-retour de scorie (7) et le manche de serrage (8) pour le tuyau de lance (9), caractérisé par le fait que sa section recevant les clapets (5, 6, 7) est réalisée en continu d'une seule pièce avec une protection de levier (3).

2. Corps tubulaire selon la revendication 1, caractérisé par le fait que les clapets (5, 6, 7) et le manche de serrage (8) sont logés dans un boîtier (1) d'une seule pièce.